(19) Europäisches Patentamt
European Patent Office
Office européen des brevets

(11) **EP 4 703 952 A1**

(12) **EUROPEAN PATENT APPLICATION**
published in accordance with Art. 153(4) EPC

(43) Date of publication:
04.03.2026 Bulletin 2026/10

(21) Application number: 23939064.4

(22) Date of filing: 27.06.2023

(51) International Patent Classification (IPC):
*G06F 30/17* (2020.01)

(52) Cooperative Patent Classification (CPC):
Y02T 90/00

(86) International application number:
**PCT/CN2023/102822**

(87) International publication number:
**WO 2024/244081 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 30.05.2023 CN 202310626283

(71) Applicant: Sinoma Wind Power Blade Co., Ltd.
Beijing 100083 (CN)

(72) Inventors:
• LI, Xingxing
  Beijing 100192 (CN)
• MAO, Xiaoe
  Beijing 100192 (CN)
• LU, Xiaofeng
  Beijing 100192 (CN)
• LI, Chengliang
  Beijing 100192 (CN)

(74) Representative: Cohausz & Florack
Patent- & Rechtsanwälte
Partnerschaftsgesellschaft mbB
Bleichstraße 14
40211 Düsseldorf (DE)

(54) **AERODYNAMIC DATA ACQUISITION METHOD AND APPARATUS, AND DEVICE AND MEDIUM**

(57) The present application discloses an aerodynamic data acquisition method and apparatus, and a device and a medium. The method comprises: acquiring airfoil aerodynamic data corresponding to each working condition, wherein each working condition comprises a first simulation working condition under a target Reynolds number and a test working condition and a second simulation working condition under a reference Reynolds number; determining an aerodynamic feature parameter matrix and an adjoint matrix under each working condition according to the airfoil aerodynamic data corresponding to each working condition; determining a target aerodynamic feature parameter matrix and a target adjoint matrix under the target Reynolds number according to the aerodynamic feature parameter matrix and the adjoint matrix under each working condition; and performing inversion on the basis of the target aerodynamic feature parameter matrix and the target adjoint matrix under the target Reynolds number, so as to obtain target airfoil aerodynamic data under the target Reynolds number.

Fig. 1

# EP 4 703 952 A1

## Description

### CROSS-REFERENCE TO RELATED APPLICATIONS

The present application claims the priority to Chinese Patent Application No. 202310626283.X filed on May 30, 2023, which is incorporated herein by reference in its entirety.

### TECHNICAL FIELD

The present application relates to the technical field of wind power generation, and in particular to an aerodynamic data acquisition method and apparatus, a device, and a medium.

### BACKGROUND

The airfoil aerodynamic data is a basic input parameter of the blade aerodynamic design, and the accurate airfoil aerodynamic data is the basis of accurate prediction of blade aerodynamic efficiency, power generation and load characteristics. At present, due to the limitation of wind tunnel test conditions and resources, the Reynolds number Re of wind turbine airfoil under a test working condition is generally low. With continuously increasing of the single unit capacity of the wind turbine generator, the blade size (including spanwise length and chordwise size) of the wind turbine is also significantly increased, which makes the Reynolds number of the blade of hundred meter level become more than 10 million in working condition. This Reynolds number is difficult to achieve in conventional low-speed wind tunnels.

In the related art, in order to obtain the airfoil aerodynamic data under a high Reynolds number working condition, the airfoil aerodynamic test data under a low Reynolds number working condition is generally used as basic data, and variation of the airfoil aerodynamic coefficient with the Reynolds number at the same angle of attack is directly and linearly superimposed on the basic data to obtain the airfoil aerodynamic data under the high Reynolds number working condition. However, in the case of large difference between stall angles of attack under the low Reynolds number working condition and the high Reynolds number working condition, and large change in Reynolds number, the above-mentioned simple data linear superposition method is likely to obtain non-physical results. That is, the corrected airfoil aerodynamic data under high Reynolds number working condition is not accurate enough, which will affect accurate evaluation of aerodynamic performance in blade design.

### SUMMARY

The purpose of the embodiments of the present application is to provide an aerodynamic data acquisition method and apparatus, a device and a medium, which can improve the accuracy of airfoil aerodynamic data under a high Reynolds number working condition and ensure accurate evaluation of aerodynamic performance in blade design.

In a first aspect, embodiments of the present application provide an aerodynamic data acquisition method, comprising: acquiring airfoil aerodynamic data corresponding to various working conditions, wherein the various working conditions comprise a first simulation working condition under a target Reynolds number, and a test working condition and a second simulation working condition under a reference Reynolds number; determining aerodynamic characteristic parameter matrices and adjoint matrices under the various working conditions according to the airfoil aerodynamic data corresponding to the various working conditions; determining a target aerodynamic characteristic parameter matrix and a target adjoint matrix under the target Reynolds number according to the aerodynamic characteristic parameter matrices and the adjoint matrices under the various working conditions; and performing inversion on the target aerodynamic characteristic parameter matrix and the target adjoint matrix under the target Reynolds number to obtain target airfoil aerodynamic data under the target Reynolds number.

In some embodiments of the first aspect, the airfoil aerodynamic data comprises an aerodynamic performance curve, the aerodynamic performance curve is for characterizing a variation relationship between an aerodynamic coefficient and an angle of attack, and the step of determining aerodynamic characteristic parameter matrices and adjoint matrices under the various working conditions according to the airfoil aerodynamic data corresponding to the various working conditions comprises: acquiring, for each of the working conditions, airfoil characteristic parameter points and flow characteristics thereof in the aerodynamic performance curve under the working condition; constructing the aerodynamic characteristic parameter matrix based on the airfoil characteristic parameter points in the aerodynamic performance curve; dividing the aerodynamic performance curve into a plurality of characteristic regions based on the airfoil characteristic parameter points and flow characteristics thereof; determining a sub-adjoint matrix corresponding to each of the characteristic regions; and combining the sub-adjoint matrices corresponding to the plurality of characteristic regions to obtain the adjoint matrix.

In some embodiments of the first aspect, the airfoil characteristic parameter points comprise characteristic parameter points corresponding to a minimum drag coefficient, and respective linear region end points, respective critical stall points, respective stall recovery points, and respective deep stall points corresponding to a positive angle of attack and a negative angle of attack.

In some embodiments of the first aspect, the plurality of characteristic regions comprise four characteristic regions with different flow characteristics corresponding to a positive angle of attack and four characteristic regions with different flow characteristics corresponding to a negative angle of attack, wherein the characteristic regions corresponding to the positive angle of attack comprise a first linear region, a first near-stall region, a first stall region and a first deep stall region, and the characteristic regions corresponding to the negative angle of attack comprise a second linear region, a second near-stall region, a second stall region and a second deep stall region; and the flow characteristic of the first linear region and the second linear region is attached flow regime, the flow characteristic of the first near-stall region and the second near-stall region is a flow regime developing from trailing edge separation to stall separation, the flow characteristic of the first stall region and the second stall region is a flow regime from stall separation to complete leading edge separation, and the flow characteristic of the first deep stall region and the second deep stall region is a flow regime of continued development after the complete leading edge separation.

In some embodiments of the first aspect, the step of determining a sub-adjoint matrix corresponding to each of the characteristic regions comprises constructing the sub-adjoint matrix corresponding to the characteristic region based on distribution of average variation rate of the aerodynamic coefficient in each of the characteristic regions.

In some embodiments of the first aspect, the step of determining a target aerodynamic characteristic parameter matrix and a target adjoint matrix under the target Reynolds number according to the aerodynamic characteristic parameter matrices and the adjoint matrices under the various working conditions comprises: adjusting the aerodynamic characteristic parameter matrix and the adjoint matrix under the test working condition according to the aerodynamic characteristic parameter matrix and the adjoint matrix under the first simulation working condition and the aerodynamic characteristic parameter matrix and the adjoint matrix under the second simulation working condition to obtain the target aerodynamic characteristic parameter matrix and the target adjoint matrix under the target Reynolds number.

In some embodiments of the first aspect, the step of determining a target aerodynamic characteristic parameter matrix and a target adjoint matrix under the target Reynolds number according to the aerodynamic characteristic parameter matrices and the adjoint matrices under the various working conditions comprises: determining Reynolds number effect by comparing the aerodynamic characteristic parameter matrix and the adjoint matrix under the first simulation working condition with those under the second simulation working condition; and adjusting the aerodynamic characteristic parameter matrix and the adjoint matrix under the test working condition based on the Reynolds number effect to obtain the target aerodynamic characteristic parameter matrix and the target adjoint matrix under the target Reynolds number.

In some embodiments of the first aspect, the step of determining Reynolds number effect by comparing the aerodynamic characteristic parameter matrix and the adjoint matrix under the first simulation working condition with those under the second simulation working condition comprises: performing linear subtraction on the aerodynamic characteristic parameter matrices under the first simulation working condition and the aerodynamic characteristic parameter matrix and the adjoint matrix under the second simulation working condition to obtain a first matrix; performing linear subtraction on the adjoint matrices under the first simulation working condition and the second simulation working condition to obtain a second matrix; multiplying the first matrix by a first relaxation factor to obtain a third matrix, and and multiplying the second matrix by a second relaxation factor to obtain a fourth matrix, wherein the third matrix is for characterizing the influence degree of Reynolds number variation on the aerodynamic characteristic parameter matrix in the Reynolds number effect, and the fourth matrix is for characterizing the influence degree of Reynolds number variation on the adjoint matrix in the Reynolds number effect.

In some embodiments of the first aspect, the step of adjusting the aerodynamic characteristic parameter matrix and the adjoint matrix under the test working condition based on the Reynolds number effect to obtain the target aerodynamic characteristic parameter matrix and the target adjoint matrix under the target Reynolds number comprises: linearly adding the third matrix and the aerodynamic characteristic parameter matrix under the test working condition to obtain the target aerodynamic characteristic parameter matrix; and linearly adding the fourth matrix and the adjoint matrix under the test working condition to obtain the target adjoint matrix.

In some embodiments of the first aspect, the step of determining a target aerodynamic characteristic parameter matrix and a target adjoint matrix under the target Reynolds number according to the aerodynamic characteristic parameter matrices and the adjoint matrices under the various working conditions comprises: performing linear superposition or non-linear superposition on the aerodynamic characteristic parameter matrices under the various working conditions to obtain the target aerodynamic characteristic parameter matrix; and performing linear superposition or non-linear superposition on the adjoint matrices under the various working conditions to obtain the target adjoint matrix.

In a second aspect, embodiments of the present application provide an aerodynamic data acquisition apparatus, comprising: an acquisition module configured to acquire airfoil aerodynamic data corresponding to various working conditions, wherein the various working conditions comprise a first simulation working condition under a target Reynolds number, and a test working condition and a second simulation working condition under a reference Reynolds number; a determination module configured to determine aerodynamic characteristic parameter matrices and adjoint matrices under the various working conditions according to the airfoil aerodynamic data corresponding to the various working conditions; the determination module further configured to determine a target aerodynamic characteristic parameter matrix and a target adjoint matrix under the target Reynolds number according to the aerodynamic characteristic parameter matrices and the adjoint matrices under the various working conditions; and an inversion module configured to perform inversion on the target aerodynamic characteristic parameter matrix and the target adjoint matrix under the target Reynolds number to obtain target airfoil aerodynamic data under the target Reynolds number.

In some embodiments of the second aspect, the airfoil aerodynamic data comprises an aerodynamic performance curve, the aerodynamic performance curve is for characterizing a variation relationship between an aerodynamic coefficient and an angle of attack. The determination module comprises: an acquisition unit configured to acquire, for the various working conditions, airfoil characteristic parameter points and flow characteristics thereof in the aerodynamic performance curve under the working condition; a construction unit, configured to construct the aerodynamic characteristic parameter matrix based on the airfoil characteristic parameter points in the aerodynamic performance curve; a division unit configured to divide the aerodynamic performance curve into a plurality of characteristic regions based on the airfoil characteristic parameter points and flow characteristics thereof; a determination unit configured to determine a sub-adjoint matrix corresponding to each of the characteristic regions; and a combination unit configured to combine the sub-adjoint matrices corresponding to the plurality of characteristic regions to obtain the adjoint matrix.

In some embodiments of the second aspect, the airfoil characteristic parameter points comprise characteristic parameter points corresponding to a minimum drag coefficient, and a respective linear region end point, a respective critical stall point, a respective stall recovery point, and a respective deep stall point corresponding to a positive angle of attack and a negative angle of attack.

In some embodiments of the second aspect, the plurality of characteristic regions comprise four characteristic regions with different flow characteristics corresponding to a positive angle of attack and four characteristic regions with different flow characteristics corresponding to a negative angle of attack, wherein the characteristic regions corresponding to the positive angle of attack comprise a first linear region, a first near-stall region, a first stall region and a first deep stall region, and the characteristic regions corresponding to the negative angle of attack comprise a second linear region, a second near-stall region, a second stall region and a second deep stall region; and wherein the flow characteristic of the first linear region and the second linear region is attached flow regime, the flow characteristic of the first near-stall region and the second near-stall region is a flow regime developing from trailing edge separation to stall separation, the flow characteristic of the first stall region and the second stall region is a flow regime from the stall separation to complete leading edge separation, and the flow characteristic of the first deep stall region and the second deep stall region is a flow regime of continued development after the complete leading edge separation.

In some embodiments of the second aspect, the determination unit is specifically configured to construct sub-adjoint matrix corresponding to each characteristic region based on distribution of average variation rate of the aerodynamic coefficient in each characteristic region.

In some embodiments of the second aspect, the determination module is specifically configured to: adjust the aerodynamic characteristic parameter matrix and the adjoint matrix under the test working condition according to the aerodynamic characteristic parameter matrix and the adjoint matrix under the first simulation working condition and the aerodynamic characteristic parameter matrix and the adjoint matrix under the second simulation working condition to obtain the target aerodynamic characteristic parameter matrix and the target adjoint matrix under the target Reynolds number.

In some embodiments of the second aspect, the determination module comprises: a determination unit, configured to determine Reynolds number effect by comparing the aerodynamic characteristic parameter matrix and the adjoint matrix under the first simulation working condition with those under the second simulation working condition; and an adjustment unit, configured to adjust the aerodynamic characteristic parameter matrix and the adjoint matrix under the test working condition based on the Reynolds number effect to obtain the target aerodynamic characteristic parameter matrix and the target adjoint matrix under the target Reynolds number.

In some embodiments of the second aspect, the determination unit is specifically configured to perform linear subtraction on the aerodynamic characteristic parameter matrices under the first simulation working condition and the aerodynamic characteristic parameter matrix and the adjoint matrix under the second simulation working condition to obtain a first matrix; perform linear subtraction on the adjoint matrices under the first simulation working condition and the second simulation working condition to obtain a second matrix; multiply the first matrix by a first relaxation factor to obtain a third matrix; and multiply the second matrix by a second relaxation factor to obtain a fourth matrix, wherein the third matrix is for characterizing the influence degree of Reynolds number variation on the aerodynamic characteristic parameter matrix in the Reynolds number effect, and the fourth matrix is for characterizing the influence degree of Reynolds number variation on the adjoint matrix in the Reynolds number effect.

In some embodiments of the second aspect, the adjustment unit is specifically configured to linearly add the third matrix and the aerodynamic characteristic parameter matrix under the test working condition to obtain the target aerodynamic characteristic parameter matrix; and linearly add the fourth matrix and the adjoint matrix under the test working condition to obtain the target adjoint matrix.

In some embodiments of the second aspect, the determination module is specifically configured to perform linear superposition or non-linear superposition on the aerodynamic characteristic parameter matrices under the various working conditions to obtain the target aerodynamic characteristic parameter matrix; and perform linear superposition or non-linear superposition on the adjoint matrices under the various working conditions to obtain the target adjoint matrix.

In a third aspect, embodiments of the present application provide an electronic device, comprising a processor and a memory storing computer program instructions, wherein the computer program instructions, when executed by the processor, implement steps of the aerodynamic data acquisition method of the first aspect.

In a fourth aspect, embodiments of the present application provide a computer readable storage medium having stored thereon computer program instructions which, when executed by a processor, implement steps of the aerodynamic data acquisition method of the first aspect.

In a fifth aspect, embodiments of the present application provide a computer program product being stored in a non-volatile storage medium, wherein the computer program product is executed by at least one processor to implement steps of the aerodynamic data acquisition method of the first aspect.

In a sixth aspect, embodiments of the present application provide a chip comprising a processor and a communication interface, the communication interface being coupled to the processor, wherein the processor is configured to run programs or instructions to implement steps of the aerodynamic data acquisition method of the first aspect.

The present application provides an aerodynamic data acquisition method and apparatus, device and medium. After airfoil aerodynamic data corresponding to each working condition is acquired, an aerodynamic characteristic parameter matrix and an adjoint matrix under each working condition are determined according to the airfoil aerodynamic data corresponding to each working condition. Since the aerodynamic characteristic parameter matrix and the adjoint matrix under each working condition are inversion matrices of an aerodynamic performance curve under the working condition, the change of airfoil aerodynamic coefficient with an angle of attack under the working condition can be reflected. In addition, the first simulation working condition under the target Reynolds number and the second simulation working condition under the reference Reynolds number are included in each working condition, and the aerodynamic characteristic parameter matrix and the adjoint matrix under the first simulation working condition and the second simulation working condition can more accurately reflect the change of the airfoil aerodynamic characteristics caused by the change of the Reynolds number, which is called as the Reynolds number effect. Based on this, according to the aerodynamic characteristic parameter matrix and the adjoint matrix under each working condition, the Reynolds number effect can be added to the aerodynamic characteristic parameter matrix and the adjoint matrix under the test working condition with the reference Reynolds number, so as to obtain the target aerodynamic characteristic parameter matrix and the target adjoint matrix under the target Reynolds number, i.e., the inversion matrix of the aerodynamic performance curve under the target Reynolds number. In this way, based on the inversion matrix, the target airfoil aerodynamic data under the target Reynolds number can be accurately established. Compared with the technical solution in the prior art, i.e., variation of the airfoil aerodynamic coefficient with the Reynolds number at the same angle of attack is directly and linearly superimposed on the airfoil aerodynamic test data under a low Reynolds number working condition, the technical solution of this application can avoid the occurrence of non-physical results caused by the existing extrapolation technology, so that the obtained target airfoil aerodynamic data is more in line with the physical law of airfoil variation with angle of attack at the target Reynolds number. Further, when using the target airfoil aerodynamic data for blade aerodynamic design, the aerodynamic performance can be accurately evaluated, and the reliability of aerodynamic design of the blade can be improved.

## BRIEF DESCRIPTION OF THE DRAWINGS

In order to explain the technical solutions of the embodiments of the present application more clearly, a brief introduction to the accompanying drawings for the embodiments of this application will be provided below.

Fig. 1 shows a flow chart of an aerodynamic data acquisition method according to an embodiment of the present application;
Fig. 2 shows a flow chart of an aerodynamic data acquisition method according to another embodiment of the present application;
Fig. 3 shows an exemplary diagram of an aerodynamic performance curve corresponding to lift coefficient according to an embodiment of the present application;
Fig. 4 shows an exemplary diagram of an aerodynamic performance curve corresponding to drag coefficient according to an embodiment of the present application;

Fig. 5 shows an exemplary diagram of characteristic regions according to an embodiment of the present application;

Fig. 6 shows a flow chart of an aerodynamic data acquisition method according to a further another embodiment of the present application;

Fig. 7 shows a flow chart of an aerodynamic data acquisition method according to a still further another embodiment of the present application;

Fig. 8 shows a structural diagram of an aerodynamic data acquisition apparatus according to an embodiment of the present application; and

Fig. 9 shows a structural diagram of an electronic device according to an embodiment of the present application.

## DETAILED DESCRIPTION

Features and exemplary embodiments of various aspects of the present application will be described in detail below. In order to make the objects, technical solutions and advantages of the present application clear, the present application will be further described in detail below with reference to the drawings and specific embodiments. It should be understood that the specific embodiments described herein are only intended to explain the present application, but not to limit the present application. For those of ordinary skilled in the art, the present application may be implemented without some of those specific details. The following description of the embodiments is only for providing a better understanding of the present application by showing examples of the present application.

Firstly, the technical terms involved in the technical solutions provided in the embodiments of the present application are introduced.

The term "aerodynamic performance curve" refers to a polar coordinate performance curve of an airfoil, which is a characteristic curve of airfoil aerodynamic coefficients (including the lift coefficient, the drag coefficient, and the pitching moment coefficient) as a function of angle of attack. The characteristics of the polar coordinate performance curve of an airfoil are determined by the flow characteristics of the airfoil in physical nature. The aerodynamic data corresponding to the aerodynamic performance curve is aerodynamic performance data.

The term "Reynolds number" refers to a dimensionless constant of a flow similarity criterion, which is defined as the ratio of inertial force to viscous force of a fluid. In general, Reynolds number can be used as a criterion parameter of fluid flow state. That is, it can be considered that, for fluids with similar Reynolds numbers, their flow states are similar. Therefore, the Reynolds number working condition corresponding to the aerodynamic data of the basic airfoil used in blade aerodynamic design should be similar to the Reynolds number corresponding to the airfoil when the blade is in operation.

The term "Reynolds number effect" is also referred to as scale effect, i.e., the variation of airfoil aerodynamic characteristics caused by the variation of Reynolds number. In general, for aeronautical and wind turbine airfoils with relative low thickness, the increase of Reynolds number will increase the linear region slope of the polar coordinate performance curve of the airfoil lift coefficient, increase the stall angle of attack, increase the maximum lift coefficient, and decrease the lift coefficient in the post-stall region more sharply. In addition, the minimum drag coefficient of an airfoil is decreased, and the range of low drag region is reduced.

The term "flow separation" refers to a flow phenomenon in which the flow does not adhere to the surface of an object when the fluid develops along the surface of the object. It is often accompanied by backflow, large-scale vortex motion and flow mixing. The large-scale flow separation of an airfoil will lead to the decrease of aerodynamic lift, the sharp increase of drag, and the stall phenomenon, which will cause the significant decrease of aerodynamic efficiency.

The airfoil aerodynamic data is a basic input parameter of the blade aerodynamic design, and the accurate airfoil aerodynamic data is the basis of accurate prediction of blade aerodynamic efficiency, power generation and load characteristics. The accuracy of the data not only requires the airfoil aerodynamic data itself applied to the blade design to be verified by wind tunnel test, but also requires that the Reynolds number corresponding to the test working condition of airfoil aerodynamic data is similar to the design operating Reynolds number of the blade, so that the uncertainty of the blade performance caused by the Reynolds number effect is reduced, and the reliability of the blade aerodynamic design is improved. At present, due to the limitation of wind tunnel test conditions and resources, the Reynolds number Re of a wind turbine airfoil under a test working condition is generally low, usually not higher than $6.0E + 06$. With continuously increasing of the single unit capacity of a wind turbine system, the size (including spanwise length and chordwise size) of a wind turbine blade is also significantly increased, which makes the operating Reynolds number of a hundred-meter-level blade exceeding ten million. This Reynolds number is difficult to achieve in conventional low-speed wind tunnels.

In the related art, in order to obtain the airfoil aerodynamic data under a high Reynolds number working condition, the airfoil aerodynamic test data under a low Reynolds number working condition is generally used as basic data, the influence of Reynolds number variations is estimated using numerical tools such as CFD, and variation of the airfoil aerodynamic coefficient with the Reynolds number at the same angle of attack is directly and linearly superimposed on the basic data to obtain the airfoil aerodynamic data under the high Reynolds number working condition. For scenarios with limited Reynolds number change, the accuracy of this method remains relatively high. However, in the case of large difference between stall angles of attack under the low Reynolds number working condition and the high Reynolds number working condition, and large change in Reynolds number, the Reynolds number effect is significant, and thus the above-mentioned simple data linear superposition method is likely to obtain non-physical results, such as premature termination of the linear region in the lift curve or multi-stage stall phenomena. That is, the corrected airfoil aerodynamic data under high Reynolds number working condition is not accurate enough, which may affect accurate evaluation of aerodynamic performance in blade design.

In order to solve the problem in the related art, embodiments of the present application provide an aerodynamic data acquisition method. After acquiring airfoil aerodynamic data corresponding to each working condition, an aerodynamic characteristic parameter matrix and an adjoint matrix under each working condition can be determined according to the airfoil aerodynamic data corresponding to each working condition. Since the aerodynamic characteristic parameter matrix and the adjoint matrix under each working condition are inversion matrices of an aerodynamic performance curve under the working condition, the change of aerodynamic coefficient of the airfoil with an angle of attack under the working condition can be reflected. In addition, the first simulation working condition under the target Reynolds number and the second simulation working condition under the reference Reynolds number are included in each working condition, and the aerodynamic characteristic parameter matrix and the adjoint matrix under the first simulation working condition and the aerodynamic characteristic parameter matrix and the adjoint matrix under the second simulation working condition can more accurately reflect the change of the airfoil aerodynamic characteristics caused by the change of the Reynolds number, which is called as the Reynolds number effect. Based on this, according to the aerodynamic characteristic parameter matrix and the adjoint matrix under each working condition, the Reynolds number effect can be added to the aerodynamic characteristic parameter matrix and the adjoint matrix under the test working condition with the reference Reynolds number, so as to obtain the target aerodynamic characteristic parameter matrix and the target adjoint matrix under the target Reynolds number, i.e., the inversion matrix of the aerodynamic performance curve under the target Reynolds number. In this way, based on the inversion matrix, the target airfoil aerodynamic data under the target Reynolds number can be accurately established. Compared with the technical solution in the prior art, i.e., variation of the airfoil aerodynamic coefficient with the Reynolds number at the same angle of attack is directly and linearly superimposed on the airfoil aerodynamic test data under a low Reynolds number working condition, the technical solution of this application can avoid the occurrence of non-physical results caused by the existing extrapolation technology, so that the obtained target airfoil aerodynamic data is more in line with the physical law of airfoil variation with angle of attack at the target Reynolds number. Further, when using the target airfoil aerodynamic data for blade aerodynamic design, the aerodynamic performance can be accurately evaluated, and the reliability of aerodynamic design of the blade can be improved.

The aerodynamic data acquisition method according to the embodiments of the present application will be described in detail below through specific embodiments and application scenarios, and combining the accompanying drawings.

In a first aspect, the present application provides an aerodynamic data acquisition method that is applicable to an electronic device. It should be noted that, the above-mentioned execution subject does not constitute a limitation to the present application.

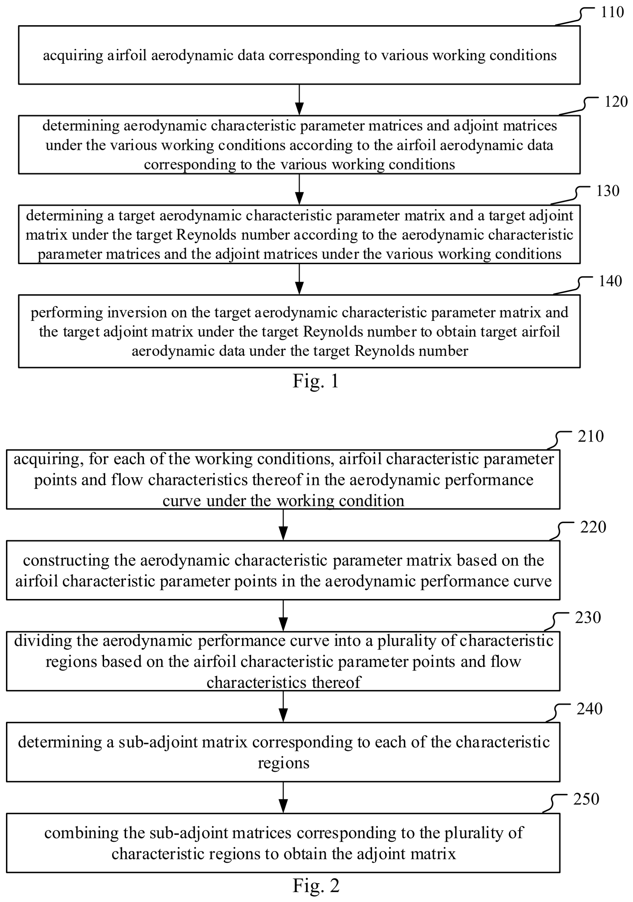

Fig. 1 is a flow chart of an aerodynamic data acquisition method according to an embodiment of the present application. As shown in Fig. 1, the aerodynamic data acquisition method includes steps 110-140.

In step 110, airfoil aerodynamic data corresponding to various working conditions is acquired.

The working conditions comprises a first simulation working condition under a target Reynolds number, and a test working condition and a second simulation working condition under a reference Reynolds number.

In step 120, aerodynamic characteristic parameter matrices and adjoint matrices under the working conditions are determined according to the airfoil aerodynamic data corresponding to the working conditions.

In step 130, a target aerodynamic characteristic parameter matrix and a target adjoint matrix under the target Reynolds number are determined according to the aerodynamic characteristic parameter matrices and the adjoint matrices under the various working conditions.

In step 140, the target aerodynamic characteristic parameter matrix and the target adjoint matrix under the target Reynolds number are inversed to obtain target airfoil aerodynamic data under the target Reynolds number.

According to the aerodynamic data acquisition method provided by the embodiments of the present application, after acquiring airfoil aerodynamic data corresponding to each working condition, an aerodynamic characteristic parameter matrix and an adjoint matrix under each working condition can be determined according to the airfoil aerodynamic data corresponding to each working condition. Since the aerodynamic characteristic parameter matrix and the adjoint matrix under each working condition are inversion matrices of an aerodynamic performance curve under the working condition, the change of aerodynamic coefficient of the airfoil with an angle of attack under the working condition can be reflected. In addition, the first simulation working condition under the target Reynolds number and the second simulation working condition under the reference Reynolds number are included in each working condition, and the aerodynamic characteristic parameter matrix and the adjoint matrix under the first simulation working condition and the second simulation working condition can more accurately reflect the change of the airfoil aerodynamic characteristics caused by the change of the Reynolds number, which is called as the Reynolds number effect. Based on this, according to the aerodynamic characteristic parameter matrix and the adjoint matrix under each working condition, the Reynolds number effect can be added to the aerodynamic characteristic parameter matrix and the adjoint matrix under the test working condition with the reference Reynolds number, so as to obtain the target aerodynamic characteristic parameter matrix and the target adjoint matrix under the target Reynolds number, i.e., the inversion matrix of the aerodynamic performance curve under the target Reynolds number. In this way, based on the inversion matrix, the target airfoil aerodynamic data under the target Reynolds number can be accurately established. Compared with the technical solution in the prior art, i.e., variation of the airfoil aerodynamic coefficient with the Reynolds number at the same angle of attack is directly and linearly superimposed on the airfoil aerodynamic test data under a low Reynolds number working condition, the technical solution of this application can avoid the occurrence of non-physical results caused by the existing extrapolation technology, so that the obtained target airfoil aerodynamic data is more in line with the physical law of airfoil variation with angle of attack at the target Reynolds number. Further, when using the target airfoil aerodynamic data for blade aerodynamic design, the aerodynamic performance can be accurately evaluated, and the reliability of aerodynamic design of the blade can be improved.

Specific implementations of the above-mentioned steps will be described in detail below in connection with specific embodiments.

Referring to step 110, airfoil aerodynamic data corresponding to the various working conditions is acquired.

Specifically, the airfoil aerodynamic data is used for characterizing a variation relationship between an aerodynamic coefficient and an angle of attack (AOA). The aerodynamic coefficients include a lift coefficient cl, a drag coefficient cd and a moment coefficient cm, wherein the angle of attack is expressed in degrees, and the lift coefficient, the drag coefficient and the moment coefficient are all dimensionless aerodynamic coefficients. The angle of attack range of airfoil aerodynamic data must cover the airfoil stall regions in positive and negative directions, and the angle of attack of the post-stall region must be greater than the critical stall angle of attack by more than three degrees.

The airfoil aerodynamic data corresponding to the first simulation working condition and the second simulation working condition are calculated by using the CFD tool or the simplified physical model tool for the same airfoil, and the airfoil aerodynamic data corresponding to the test working condition is obtained by wind tunnel test under the reference Reynolds number (Re_base).

The reference Reynolds number is a low Reynolds number, while the target Reynolds number is a high Reynolds number. The reference Reynolds number is less than the target Reynolds number. Both the reference Reynolds number and the target Reynolds number can be specifically set according to actual requirements. For example, the reference Reynolds number is set to 6,000,000 or 8,000,000, and the target Reynolds number is set to 10,000,000, which are not specifically limited in the present application.

It should be noted that, the number of the reference Reynolds numbers may be at least one.

Exemplarily, the target Reynolds number is 10,000,000, and the reference Reynolds number may include 4,000,000 and 6,000,000. Thus, the present application may establish a target airfoil aerodynamic data at 10,000,000 from the airfoil aerodynamic data corresponding to a test working condition and a second simulation working condition at 4,000,000, a test working condition and a second simulation working condition at 6,000,000, and a first simulation working condition at 10,000,000.

Referring to step 120, the aerodynamic characteristic parameter matrix and the adjoint matrix under each working condition are determined according to the airfoil aerodynamic data corresponding to the various working conditions.

In some embodiments of the present application, the airfoil aerodynamic data comprises an aerodynamic performance curve, the aerodynamic performance curve is used for characterizing the variation relationship between the aerodynamic coefficient and the angle of attack, and the aerodynamic characteristic parameter matrix is constructed from the airfoil characteristic parameter points in the aerodynamic performance curve.

In some embodiments of the present application, in order to construct the aerodynamic characteristic parameter matrix and the adjoint matrix under each working condition, Fig. 2 is a flow chart of an aerodynamic data acquisition method according to another embodiment of the present application, and the above-mentioned step 120 may include steps 210-250 as shown in Fig. 2.

In step 210, airfoil characteristic parameter points and flow characteristics thereof in the aerodynamic performance curve for each of the working conditions are acquired under the working condition.

In step 220, the aerodynamic characteristic parameter matrix is constructed based on the airfoil characteristic parameter points in the aerodynamic performance curve.

In step 230, the aerodynamic performance curve is divided into a plurality of characteristic regions based on the airfoil characteristic parameter points and flow characteristics thereof.

In step 240, a sub-adjoint matrix corresponding to each of the characteristic regions is determined.

In step 250, the sub-adjoint matrices corresponding to the plurality of characteristic regions are combined to obtain the adjoint matrix.

Specifically, in some embodiments, the airfoil characteristic parameter points comprise characteristic parameter points corresponding to a minimum drag coefficient, and a respective linear region end point, a respective critical stall point, a respective stall recovery point, and a respective deep stall point corresponding to a positive angle of attack and a negative angle of attack.

It should be noted that, aerodynamic coefficients include a lift coefficient, a drag coefficient, and a moment coefficient. Therefore, each aerodynamic coefficient corresponds to one aerodynamic performance curve, and there are three aerodynamic performance curves. However, the characteristic parameter points in the three aerodynamic performance curves have the same abscissa, namely, correspond to the same angle of attack.

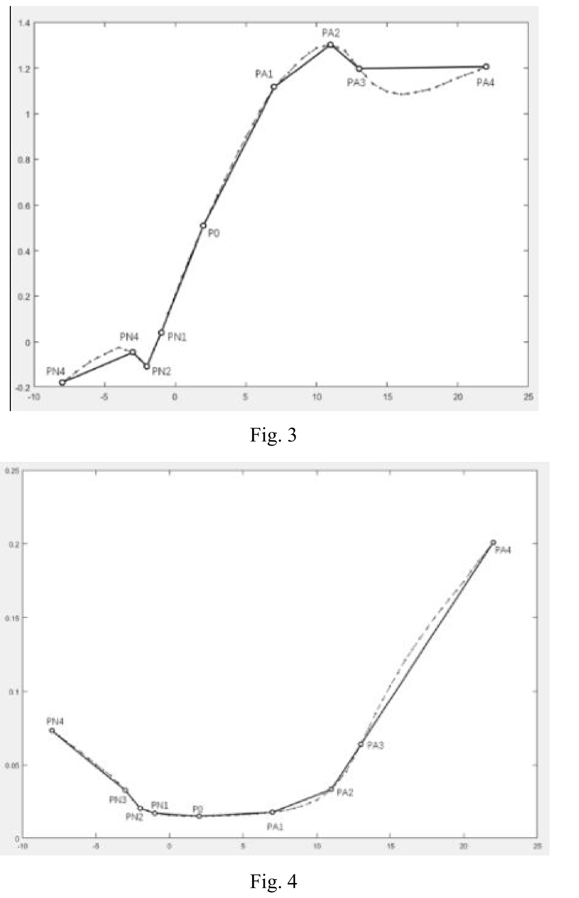

Exemplarily, Fig. 3 is an aerodynamic performance curve corresponding to the lift coefficient, wherein the abscissa represents the angle of attack, and the ordinate represents the lift coefficient. Fig. 4 is an aerodynamic performance curve corresponding to the drag coefficient, wherein the abscissa represents the angle of attack, and the ordinate represents the drag coefficient. In Fig. 3 and Fig. 4, the dotted lines are lines obtained by connecting actual data, and the solid lines are lines obtained by connecting airfoil characteristic parameter points. The airfoil characteristic parameter points shown in Fig. 3 and Fig. 4 may include the following nine points: P0 is the characteristic parameter point under the angle of attack corresponding to the minimum drag coefficient of the airfoil; PA1 is the endpoint of the linear region of the lift curve in the positive angle of attack of the linear region (starting from point P0 in the direction of angle of attack increasing); PN 1 is the endpoint of the linear region of the lift curve in the negative angle of attack of the linear region (starting from point P0 in the direction of angle of attack decreasing); PA2 is the critical stall point in the positive angle of attack of the linear region (starting from point P0 in the direction of angle of attack increasing); PN2 is the critical stall point in the negative angle of attack of the linear region (starting from point P0 in the direction of angle of attack decreasing); PA3 is the stall recovery point in the positive angle of attack of the linear region (starting from point P0 in the direction of angle of attack increasing), i.e., the critical inflection point of the post-stall lift curve; PN3 is the stall recovery point in the negative angle of attack of the linear region (starting from point P0 in the direction of angle of attack decreasing), i.e., the critical inflection point of the post-stall lift curve; PA4 is the deep stall point in the positive angle of attack of the linear region (starting from point P0 in the direction of angle of attack increasing); and PN4 is the deep stall point in the negative angle of attack of the linear region (starting from point P0 in the direction of angle of attack decreasing).

It should be noted that, the above-mentioned nine airfoil characteristic parameter points as an example do not constitute a specific definition of the present application, and the present application may define any number of airfoil characteristic parameter points, such as six, eight or ten, etc. The present application does not specifically limit the number of airfoil characteristic parameter points.

It can be seen from Fig. 3 and Fig. 4 that, there are eight airfoil characteristic parameter points in the aerodynamic performance curves corresponding to the lift coefficient and the drag coefficient, and the airfoil characteristic parameter points in the two aerodynamic performance curves correspond to the same abscissa, namely, the same angle of attack.

As a specific example, the form of the aerodynamic characteristic parameter matrix A may be as shown in equation (1):

$$A=[AOA(Pi), cl(Pi), cd(Pi), cm(Pi)] \qquad (1)$$

wherein Pi is an airfoil characteristic parameter point, AOA (Pi) is an angle of attack of Pi, cl (Pi) is a lift coefficient of Pi, cd (Pi) is a drag coefficient of Pi, and cm (Pi) is a moment coefficient of Pi.

Based on the above-mentioned equation (1), the aerodynamic characteristic parameter matrix of each working condition can be constructed, which specifically includes: an aerodynamic characteristic parameter matrix A_test_Re_base under a test working condition with the reference Reynolds number, an aerodynamic characteristic parameter matrix A_simu_Re_obj under a first simulation working condition, and an aerodynamic characteristic parameter matrix A_simu_Re_base under a second simulation working condition.

In some embodiments of the present application, in order to improve the accuracy of the aerodynamic performance characterized by the characteristic parameter matrix, the present application may also increase the dimension of the characteristic parameter matrix.

In some embodiments of the present application, the plurality of characteristic regions comprise four characteristic regions with different flow characteristics corresponding to a positive angle of attack and four characteristic regions with different flow characteristics corresponding to a negative angle of attack, wherein the characteristic regions corresponding to the positive angle of attack comprise a first linear region, a first near-stall region, a first stall region and a first deep stall region, and the characteristic regions corresponding to the negative angle of attack comprise a second linear region, a second near-stall region, a second stall region and a second deep stall region.

The flow characteristic of the first linear region and the second linear region is attached flow regime, the flow characteristic of the first near-stall region and the second near-stall region is a flow regime developing from trailing edge separation to stall separation, the flow characteristic of the first stall region and the second stall region is a flow regime from the stall separation to complete leading edge separation, and the flow characteristic of the first deep stall region and the second deep stall region is a flow regime of continued development after the complete leading edge separation.

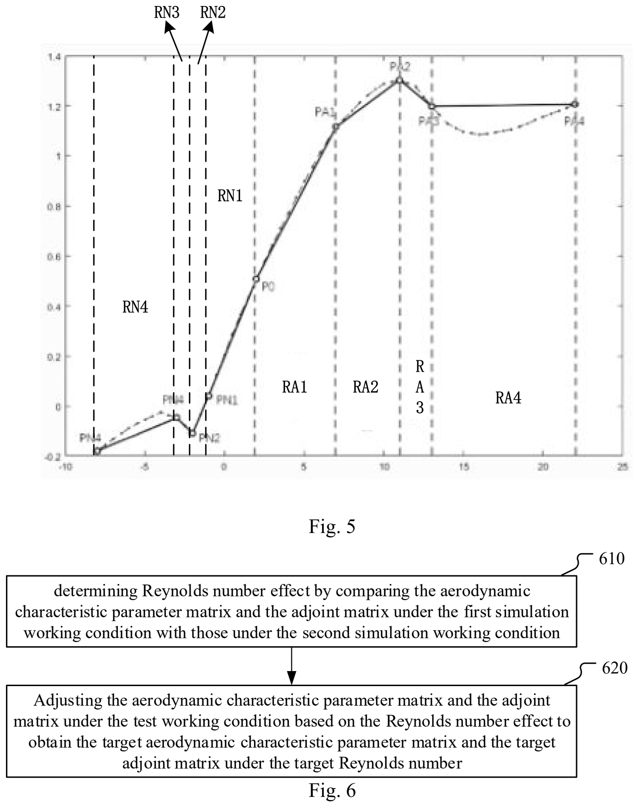

In some examples, taking Fig. 3 as an example, after the aerodynamic performance curve shown in Fig. 3 is divided, the eight characteristic regions shown in Fig. 5 can be obtained: a first linear region RA1 defined by points P0-PA1, which is a linear region of a positive angle of attack and corresponds to attached flow condition; a first near-stall region RA2 defined by points PA1-PA2, which is a near-stall region of the positive angle of attack and corresponds to a condition between trailing edge separation and stall separation; a first stall region RA3 defined by points PA2-PA3, which is a linear region of the positive angle of attack and corresponds to a condition of stall separation and complete leading edge separation; and a first deep stall region RA4 defined by points PA3-PA4, which is a linear region of the positive angle of attack and corresponds to a continued development state after complete leading edge separation (possibly including partial flow separation and reattachment); likewise, with the point P0 as a reference point, the aerodynamic characteristic curve can also be divided into four characteristic regions along the direction of the angle of attack decreasing: a second linear region RN1 defined by points P0-PN1, which is a linear region of a negative angle of attack and corresponds to attached flow condition; a second near-stall region RN2 defined by points PN1-PN2, which is a near-stall region of the negative angle of attack and corresponds to a condition between trailing edge separation and stall separation; a second stall region RN3 defined by points PN2-PN3, which is a linear region of the negative angle of attack and corresponds to a condition of stall separation and complete leading edge separation; and a second deep stall region RN4 defined by points PN3-PN4, which is a linear region of the negative angle of attack and corresponds to a continued development state after complete leading edge separation (possibly including partial flow separation and reattachment).

In some embodiments of the present application, the step 240 of determining a sub-adjoint matrix corresponding to each of the characteristic regions comprises constructing the sub-adjoint matrices corresponding to the characteristic regions based on distribution of average variation rate of the aerodynamic coefficient in each of the characteristic regions.

As a specific example, within each characteristic region, a sub-adjoint matrix BR may be established. Taking RA1 region as an example, the angle of attack range in this region is equally divided into i parts, and the coordinate vector of angle of attack in dimension j = i + 1 is obtained. Then, the sub-adjoint matrix BRA1 of the characteristic region RA1 is established according to the distribution of the average variation rate of the lift coefficient, the drag coefficient and the moment coefficient with the change of the angle of attack at the coordinates of the angle of attack of i + 1 dimensions, and the form of the sub-adjoint matrix BRA1 can be shown as equation (2):

$$BRA1 = [AOA\_RA1(j), dcl/dAOA(j), dcd/dAOA(j), dcd/dAOA(j), dcm/dAOA(j)] \quad (2)$$

wherein AOA_RA1 (j) is distribution of angle of attack in j dimensions in RA1 region, dcl/dAOA (j) is distribution of average variation rate of the lift coefficient with angle of attack in j dimensions in RA1 region, dcd/dAOA (j) is distribution of average variation rate of drag coefficient with angle of attack in j dimensions in RA1 region, and dcm/dAOA (j) is distribution of average variation rate of the moment coefficient with angle of attack in j dimensions in RA1 region.

Combining the above sub-adjoint matrices of the characteristic regions, the (aerodynamic performance) adjoint matrices of an airfoil under a certain specific working condition can be obtained, which may specifically comprise: a sub-adjoint matrix BR_test_Re_base under a test working condition with the reference Reynolds number, a sub-adjoint matrix BR_simu_Re_obj under a first simulation working condition, and a sub-adjoint matrix BR_simu_Re_base under a second simulation working condition.

Referring to step 130, a target aerodynamic characteristic parameter matrix and a target adjoint matrix under the target Reynolds number are determined according to the aerodynamic characteristic parameter matrices and the adjoint matrices under the various working conditions.

Specifically, the electronic device may adjust the aerodynamic characteristic parameter matrix and the adjoint matrix under the test working condition according to the aerodynamic characteristic parameter matrix and the adjoint matrix under the first simulation working condition and the aerodynamic characteristic parameter matrix and the adjoint matrix under the second simulation working condition to obtain the target aerodynamic characteristic parameter matrix and the target adjoint matrix under the target Reynolds number.

In some embodiments of the present application, Fig. 6 is a flow chart of an aerodynamic data acquisition method according to a further another embodiment of the present application. The above-mentioned step 130 may include steps 610 and 620 as shown in Fig. 6.

In step 610, Reynolds number effect is determined by comparing the aerodynamic characteristic parameter matrix and the adjoint matrix under the first simulation working condition with those under the second simulation working condition.

In step 620, the aerodynamic characteristic parameter matrix and the adjoint matrix under the test working condition are adjusted based on the Reynolds number effect to obtain the target aerodynamic characteristic parameter matrix and the target adjoint matrix under the target Reynolds number.

Specifically, the electronic device can superpose the Reynolds number effect linearly or non-linearly to the aerodynamic characteristic parameter matrix and the adjoint matrix under the test working condition to obtain the target aerodynamic characteristic parameter matrix and the target adjoint matrix under the target Reynolds number.

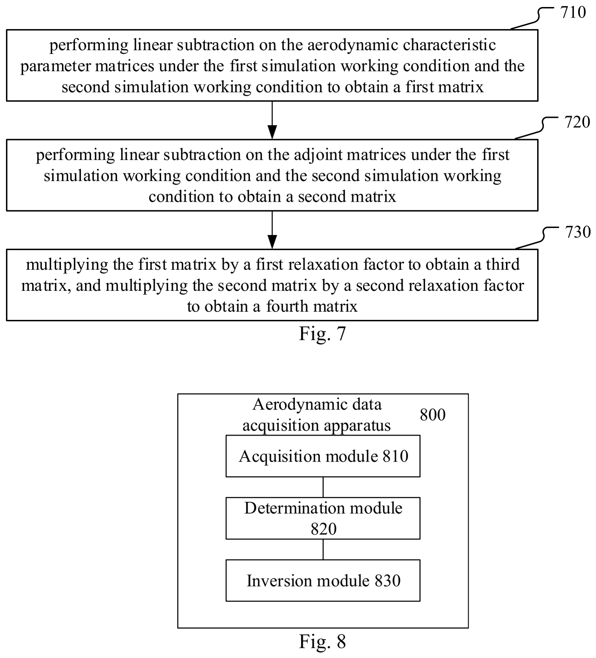

In some embodiments of the present application, Fig. 7 is a flow chart of an aerodynamic data acquisition method according to a still further another embodiment of the present application. The above-mentioned step 610 may include steps 710-730 as shown in Fig. 7.

In step 710, linear subtraction is performed on the aerodynamic characteristic parameter matrices under the first simulation working condition and the second simulation working condition to obtain a first matrix.

In step 720, linear subtraction is performed on the adjoint matrices under the first simulation working condition and the second simulation working condition to obtain a second matrix.

In step 730, the first matrix is multiplied by a first relaxation factor to obtain a third matrix, and the second matrix is multiplied by a second relaxation factor to obtain a fourth matrix.

The third matrix is for characterizing the influence degree of Reynolds number variation on the aerodynamic characteristic parameter matrix in the Reynolds number effect, and the fourth matrix is for characterizing the influence degree of Reynolds number variation on the adjoint matrix in the Reynolds number effect.

In some embodiments of the present application, the above-mentioned step 520 may specifically include the following steps: linearly adding the third matrix and the aerodynamic characteristic parameter matrix under the test working condition to obtain the target aerodynamic characteristic parameter matrix; and linearly adding the fourth matrix and the adjoint matrix under the test working condition to obtain the target adjoint matrix.

In some embodiments of the present application, the above-mentioned step 130 of determining a target aerodynamic characteristic parameter matrix and a target adjoint matrix under the target Reynolds number according to the aerodynamic characteristic parameter matrix and the adjoint matrix under each working condition may specifically include the steps as follows: performing linear superposition or non-linear superposition on the aerodynamic characteristic parameter matrices under the various working conditions to obtain the target aerodynamic characteristic parameter matrix; and performing linear superposition or non-linear superposition on the adjoint matrices under the various working conditions to obtain the target adjoint matrix.

Specifically, in step 130, the target aerodynamic characteristic parameter matrix A_testCor_Re_obj may be determined using equation (3) below, and the target adjoint matrix may be determined using equation (4) below:

$$A\_testCor\_Re\_obj = A\_test\_Re\_base + k(A\_simu\_Re\_obj - A\_simu\_Re\_base) \qquad (3)$$

$$BR\_testCor\_Re\_obj = BR\_test\_Re\_base + m(BR\_simu\_Re\_obj - BR\_simu\_Re\_base) \quad (4)$$

wherein k is a first relaxation factor and m is a second relaxation factor.

It should be noted that, the values of k and m are 1 when the accuracy and precision of the numerical simulation calculation tool for airfoil aerodynamic performance are relatively high, and the values of k and m need to be adjusted and reduced when the accuracy is reduced.

In step 140, the target aerodynamic characteristic parameter matrix and the target adjoint matrix under the target Reynolds number are inversed, so as to obtain target airfoil aerodynamic data under the target Reynolds number.

Specifically, the target aerodynamic characteristic parameter matrix and the target adjoint matrix under the target Reynolds number are inversed to obtain the aerodynamic data in each characteristic region of the airfoil, and the aerodynamic data in each characteristic region are combined to obtain the target airfoil aerodynamic data.

Exemplarily, taking the inversion of the lift curve in the characteristic region RA1 as an example, RA1 is equally divided into i parts, resulting in j = i + 1 dimensions, and the lift coefficient cl (n) in this region can be determined by equations (5) and (6):

$$cl(n) = cl(n-1) + dcl/dAOA(n)*(AOA(n) - AOA(n-1)) \qquad (5)$$

$$cl(0) = cl(P0) \qquad (6)$$

wherein n = 1 ...,j, cl (n) is the lift coefficient of the $n^{th}$ dimension, cl (n-1) is the lift coefficient of the $(n-1)^{th}$ dimension, dcl/dAOA (n) is the distribution of local average rates of change of the lift coefficient of the $n^{th}$ dimension, AOA (n) is the angle of attack of the $n^{th}$ dimension, AOA (n-1) is the angle of attack of the $(n-1)^{th}$ dimension, cl(0) is the lift coefficient when the angle of attack is zero, and cl (P0) is the angle of attack on the abscissa of the characteristic parameter point P0.

Using the same method, the electronic device can obtain the drag coefficient and moment coefficient in RA1 characteristic region, and can further obtain the complete aerodynamic data under the target Reynolds number by combining data of each of the characteristic regions.

It will be appreciated that, the executing entity of the aerodynamic data acquisition method provided by the embodiments of the present application may be an electronic device, or a control module of an aerodynamic data acquisition apparatus for implementing the aerodynamic data acquisition method. The aerodynamic data acquisition apparatus will be introduced in detail below.

Fig. 8 is a structural diagram of an aerodynamic data acquisition apparatus according to an embodiment of the present application. As shown in Fig. 8, the aerodynamic data acquisition apparatus 800 may include an acquisition module 810, a determination module 820, and an inversion module 830.

The acquisition module 810 is configured to acquire airfoil aerodynamic data corresponding to the various working conditions, wherein the various working conditions comprise a first simulation working condition under a target Reynolds number, and a test working condition and a second simulation working condition under a reference Reynolds number. The determination module 820 is configured to determine aerodynamic characteristic parameter matrices and adjoint matrices under the various working conditions according to the airfoil aerodynamic data corresponding to the various working conditions. The determination module 820 is further configured to determine a target aerodynamic characteristic parameter matrix and a target adjoint matrix under the target Reynolds number according to the aerodynamic characteristic parameter matrices and the adjoint matrices under the various working conditions. The inversion module 830 is configured to perform inversion on the target aerodynamic characteristic parameter matrix and the target adjoint matrix under the target Reynolds number to obtain target airfoil aerodynamic data under the target Reynolds number.

According to the aerodynamic data acquisition apparatus provided by the present application, after acquiring airfoil aerodynamic data corresponding to each working condition, an aerodynamic characteristic parameter matrix and an adjoint matrix under each working condition can be determined according to the airfoil aerodynamic data corresponding to each working condition. Since the aerodynamic characteristic parameter matrix and the adjoint matrix under each working condition are inversion matrices of an aerodynamic performance curve under the working condition, the change of aerodynamic coefficient of the airfoil with an angle of attack under the working condition can be reflected. In addition, the first simulation working condition under the target Reynolds number and the second simulation working condition under the reference Reynolds number are included in each working condition, and the aerodynamic characteristic parameter matrix and the adjoint matrix under the first simulation working condition and the second simulation working condition can more accurately reflect the change of the airfoil aerodynamic characteristics caused by the change of the Reynolds number, which is called as the Reynolds number effect. Based on this, according to the aerodynamic characteristic parameter matrix and the adjoint matrix under each working condition, the Reynolds number effect can be added to the aerodynamic characteristic parameter matrix and the adjoint matrix under the test working condition with the reference Reynolds number, so as to obtain the target aerodynamic characteristic parameter matrix and the target adjoint matrix under the target Reynolds number, i.e., the inversion matrix of the aerodynamic performance curve under the target Reynolds number. In this way, based on the inversion matrix, the target airfoil aerodynamic data under the target Reynolds number can be accurately established. Compared with the technical solution in the prior art, i.e., variation of the airfoil aerodynamic coefficient with the Reynolds number at the same angle of attack is directly and linearly superimposed on the airfoil aerodynamic test data under a low Reynolds number working condition, the technical solution of this application can avoid the occurrence of non-physical results caused by the existing extrapolation technology, so that the obtained target airfoil aerodynamic data is more in line with the physical law of airfoil variation with angle of attack at the target Reynolds number. Further, when using the target airfoil aerodynamic data for blade aerodynamic design, the aerodynamic performance can be accurately evaluated, and the reliability of aerodynamic design of the blade can be improved.

In some embodiments of the present application, the airfoil aerodynamic data comprises an aerodynamic performance curve, the aerodynamic performance curve being used for characterizing a variation relationship between an aerodynamic coefficient and an angle of attack. The determination module 820 comprises: an acquisition unit, configured to acquire, for each of the working conditions, airfoil characteristic parameter points and flow characteristics thereof in the aerodynamic performance curve under the working condition; a construction unit configured to construct the aerodynamic characteristic parameter matrix based on the airfoil characteristic parameter points in the aerodynamic performance curve; a division unit, configured to divide the aerodynamic performance curve into a plurality of characteristic regions based on the airfoil characteristic parameter points and flow characteristics thereof; a determination unit configured to determine a sub-adjoint matrix corresponding to each of the characteristic regions; and a combination unit configured to combine the sub-adjoint matrices corresponding to the plurality of characteristic regions to obtain the adjoint matrix.

In some embodiments of the present application, the airfoil characteristic parameter points comprise characteristic parameter points corresponding to a minimum drag coefficient, and a respective linear region end point, a respective critical stall point, a respective stall recovery point, and a respective deep stall point corresponding to a positive angle of attack and a negative angle of attack.

In some embodiments of the present application, the plurality of characteristic regions comprise four characteristic regions with different flow characteristics corresponding to a positive angle of attack and four characteristic regions with different flow characteristics corresponding to a negative angle of attack, wherein the characteristic regions corresponding to the positive angle of attack comprise a first linear region, a first near-stall region, a first stall region and a first deep stall region, and the characteristic regions corresponding to the negative angle of attack comprise a second linear region, a second near-stall region, a second stall region and a second deep stall region; and wherein the flow characteristic of the first linear region and the second linear region is attached flow regime, the flow characteristic of the first near-stall region and the second near-stall region is a flow regime developing from trailing edge separation to stall separation, the flow characteristic of the first stall region and the second stall region is a flow regime from the stall separation to complete leading edge separation, and the flow characteristic of the first deep stall region and the second deep stall region is a flow regime of continued development after the complete leading edge separation.

In some embodiments of the present application, the determination unit is specifically configured to construct the sub-adjoint matrix corresponding to the characteristic region based on distribution of average variation rate of the aerodynamic coefficient in each of the characteristic regions.

In some embodiments of the present application, the determination module 820 is specifically configured to adjust the aerodynamic characteristic parameter matrix and the adjoint matrix under the test working condition according to the aerodynamic characteristic parameter matrix and the adjoint matrix under the first simulation working condition and the aerodynamic characteristic parameter matrix and the adjoint matrix under the second simulation working condition to obtain the target aerodynamic characteristic parameter matrix and the target adjoint matrix under the target Reynolds number.

In some embodiments of the present application, the determination module 820 comprises a determination unit configured to determine Reynolds number effect by comparing the aerodynamic characteristic parameter matrix and the adjoint matrix under the first simulation working condition with those under the second simulation working condition; and an adjustment unit configured to adjust the aerodynamic characteristic parameter matrix and the adjoint matrix under the test working condition based on the Reynolds number effect to obtain the target aerodynamic characteristic parameter matrix and the target adjoint matrix under the target Reynolds number.

In some embodiments of the present application, the determination unit is specifically configured to perform linear subtraction on the aerodynamic characteristic parameter matrices under the first simulation working condition and the aerodynamic characteristic parameter matrix and the adjoint matrix under the second simulation working condition to obtain a first matrix; perform linear subtraction on the adjoint matrices under the first simulation working condition and the second simulation working condition to obtain a second matrix; and multiply the first matrix by a first relaxation factor to obtain a third matrix, and multiply the second matrix by a second relaxation factor to obtain a fourth matrix, wherein the third matrix is for characterizing the influence degree of Reynolds number variation on the aerodynamic characteristic parameter matrix in the Reynolds number effect, and the fourth matrix is for characterizing the influence degree of Reynolds number variation on the adjoint matrix in the Reynolds number effect.

In some embodiments of the present application, the adjustment unit is specifically configured to linearly add the third matrix and the aerodynamic characteristic parameter matrix under the test working condition to obtain the target aerodynamic characteristic parameter matrix; and linearly add the fourth matrix and the adjoint matrix under the test working condition to obtain the target adjoint matrix.

In some embodiments of the present application, the determination module 820 is specifically configured to perform linear superposition or non-linear superposition on the aerodynamic characteristic parameter matrices under the various working conditions to obtain the target aerodynamic characteristic parameter matrix; and perform linear superposition or non-linear superposition on the adjoint matrices under the various working conditions to obtain the target adjoint matrix.

The aerodynamic data acquisition apparatus according to the embodiments of the present application can implement various processes implemented by the electronic device in the method embodiments of Figs. 1-7, and can achieve the same technical effects. In order to avoid repetition, the details thereof will not be repeated here.

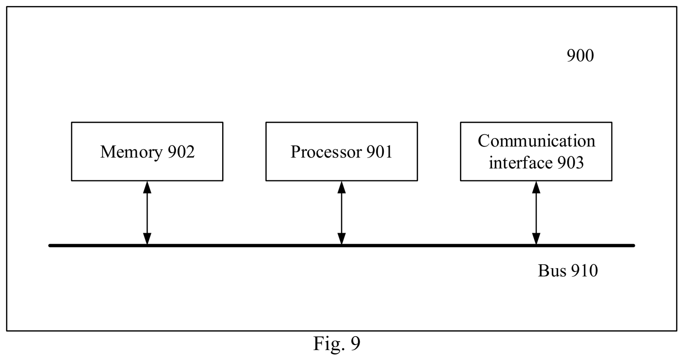

Fig. 9 is a hardware structural diagram of an electronic device according to an embodiment of the present application.

As shown in Fig. 9, the electronic device 900 in this embodiment may include a processor 901 and a memory 902 storing computer program instructions.

Specifically, the processor 901 described above may include a central processing unit (CPU), or an application specific integrated circuit (ASIC), or may be configured as one or more integrated circuits for implementing the embodiments of the present application.

The memory 902 may include mass memory for storing data or instructions. By way of example but not limitation, the memory 902 may include a Hard Disk Drive (HDD), a floppy disk drive, a flash memory, an optical disk, a magneto-optical disk, a magnetic tape, or a Universal Serial Bus (USB) drive, or a combination of two or more thereof. The memory 902 may include removable or non-removable (or fixed) media, as appropriate. The memory 902 may be provided internal or external to the integrated gateway disaster tolerance system or device, as appropriate. In a particular embodiment, the memory 902 is a non-volatile solid-state memory. The memory may include Read-Only Memory (ROM), random Access Memory (RAM), magnetic disk storage media systems and devices, optical storage media systems and devices, flash memory systems and devices, electrical, optical, or other physical/tangible memory storage systems and devices. Thus, in general, the memory includes one or more tangible (non-transitory) computer-readable storage media (e.g. memory systems and devices) having data embodied in software comprising computer-executable instructions, and the software, when being executed (e.g. by one or more processors), is operable to perform the operations described in the methods according to embodiments of the present application.

The processor 901 implements any one of the aerodynamic data acquisition methods of the above-mentioned embodiments by reading and executing computer program instructions stored in the memory 902.

In one example, the electronic device 900 may also include a communication interface 903 and a bus 910. As shown in Fig. 9, the processor 901, the memory 902, and the communication interface 903 are connected to each other via the bus 910, and communicate with each other thereby.

The communication interface 903 is mainly used for realizing communication between various modules, apparatus, controllers and/or systems and devices in the embodiments of the present application.

The bus 910 includes hardware, software, or both thereof, for coupling the components of an on-line data traffic billing system, device to one another. By way of example but not limitation, the bus may include an accelerated graphics port (AGP) or other graphics bus, an enhanced industry standard architecture (EISA) bus, a front side bus (FSB), a Hyper Transport (HT) interconnect, an industry standard architecture (ISA) bus, an infinite bandwidth interconnect, a low pin count (LPC) bus, a memory bus, a micro channel architecture (MCA) bus, a peripheral component interconnect (PCI) bus, a PCI-Express (PCI-X) bus, a serial advanced technology attachment (SATA) bus, a video electronics standards association local (VLB) bus, or other suitable bus, or a combination of two or more thereof. The bus 910 may include one or more buses, as appropriate. Although embodiments of the present application describe and illustrate particular buses, any suitable bus or interconnect is contemplated by the present application.

The electronic device according to the embodiments of the present application can implement various processes implemented by the electronic device in the method embodiments of Figs. 1-7, and can achieve the same technical effects. In order to avoid repetition, the details thereof will not be repeated here.

Combining the aerodynamic data acquisition method in the above-mentioned embodiments, the embodiments of the present application can provide a computer storage medium for implementation thereof. The computer storage medium having stored thereon computer program instructions which, when executed by a processor, implement steps of the aerodynamic data acquisition method according to any one of the above-mentioned embodiments.

Combining the aerodynamic data acquisition method in the above-mentioned embodiments, the embodiments of the present application can provide a computer program product for implementation thereof. The (computer) program product is stored in a non-volatile storage medium, wherein the computer program product is executed by at least one processor to implement steps of the aerodynamic data acquisition method according to any one of the above-mentioned embodiments.

The embodiments of the present application further provide a chip comprising a processor and a communication interface, the communication interface being coupled to the processor, wherein the processor is configured to run programs or instructions to implement steps of the aerodynamic data acquisition method according to any one of the above-mentioned embodiments. The chip can achieve the same technical effects. In order to avoid repetition, the details thereof will not be repeated here.

It is to be understood that, chips referred to in embodiments of the present application may also be referred to as system chip, system-on-a-chip, or the like.

It should be noted that, this application is not limited to the specific configurations and processes described above and illustrated in the drawings. For the sake of brevity, a detailed description of known methods is omitted here. In the embodiments described above, a number of specific steps have been described and shown as examples. However, the method processes of the present application are not limited to the specific steps described and illustrated herein, and those skilled in the art can make various changes, modifications, and additions, or change the order between steps, after understanding the gist of the present application.

The functional blocks shown in the block diagrams described above may be implemented in hardware, software, firmware, or a combination thereof. When implemented in hardware, it may be, for example, an electronic circuit, an application specific integrated circuit (ASIC), appropriate firmware, a plug-in, a function card, and so on. When implemented in software, the elements of the present application are programs or code segments used to perform the required tasks. The programs or code segments may be stored in a machine-readable medium or transmitted over a transmission medium or communication link by a data signal carried in a carrier wave. The "machine-readable medium" may include any medium that can store or transmit information. Examples of the machine-readable medium include an electronic circuit, a semiconductor memory system, a device, an ROM, a flash memory, an erasable ROM (EROM), a floppy disk, a CD-ROM, an optical disk, a hard disk, an optical fiber medium, a radio frequency (RF) link, and so on. The code segments may be downloaded via a computer network, such as the Internet, an intranet, or the like.

It should also be noted that, the exemplary embodiments mentioned in this application describe methods or systems based on a series of steps or apparatus. However, the present application is not limited to the order of the steps described above, that is, the steps may be performed in the order mentioned in the embodiments, or may be performed in an order different from that in the embodiments, or several steps may be performed at the same time.

Aspects of the present application are described above with reference to flow charts and/or block diagrams of methods, apparatus (systems) and computer program products according to embodiments of the disclosure. It will be understood that, each block in the flow charts and/or block diagrams, and a combination of any of blocks in the flow charts and/or block diagrams, may be implemented by computer program instructions. These computer program instructions may be provided to a processor of a general purpose computer, a special purpose computer, or other programmable data processing apparatus to produce a machine, such that the instructions, which being executed via the processor of the computer or other programmable data processing apparatus, enable the implementation of the functions/actions specified in one or more blocks in the flow charts and/or block diagrams. Such a processor may be, but is not limited to, a general purpose processor, a special purpose processor, an application specific processor, or field programmable logic circuit. It should also be understood that, each block in the block diagrams and/or flow charts, and a combination of any of blocks in the block diagrams and/or flow charts, may also be implemented by a special purpose hardware that performs the specified functions or actions, or a combination of special purpose hardware and computer instructions.

The above are only specific implementations of the present application, those skilled in the art can clearly understand that, for the convenience and brevity of the description, the specific working processes of the above-described systems, modules and controllers can be referred to the corresponding processes in the foregoing method embodiments, which is not repeated here. It should be understood that, the protection scope of this application is not limited to this, and any person skilled in the art can easily think of various equivalent modifications or replacements within the technical scope disclosed in this application, and these modifications or replacements should all be covered within the scope of protection of this application.

## Claims

1. An aerodynamic data acquisition method, comprising:

   acquiring airfoil aerodynamic data corresponding to various working conditions, wherein the various working conditions comprise a first simulation working condition under a target Reynolds number, and a test working condition and a second simulation working condition under a reference Reynolds number;
   determining aerodynamic characteristic parameter matrices and adjoint matrices under the various working conditions according to the airfoil aerodynamic data corresponding to the various working conditions;
   determining a target aerodynamic characteristic parameter matrix and a target adjoint matrix under the target Reynolds number according to the aerodynamic characteristic parameter matrices and the adjoint matrices under the various working conditions; and
   performing inversion on the target aerodynamic characteristic parameter matrix and the target adjoint matrix under the target Reynolds number to obtain target airfoil aerodynamic data under the target Reynolds number.

2. The method according to claim 1, wherein the airfoil aerodynamic data comprises an aerodynamic performance curve that is for characterizing a variation relationship between an aerodynamic coefficient and an angle of attack, and the determining aerodynamic characteristic parameter matrices and adjoint matrices under the various working conditions according to the airfoil aerodynamic data corresponding to the various working conditions comprises:

   acquiring, for each of the working conditions, airfoil characteristic parameter points and flow characteristics thereof in the aerodynamic performance curve under the working condition;
   constructing the aerodynamic characteristic parameter matrix based on the airfoil characteristic parameter points in the aerodynamic performance curve;
   dividing the aerodynamic performance curve into a plurality of characteristic regions based on the airfoil characteristic parameter points and the flow characteristics thereof;
   determining a sub-adjoint matrix corresponding to each of the characteristic regions; and
   combining the sub-adjoint matrices corresponding to the plurality of characteristic regions to obtain the adjoint matrix.

3. The method according to claim 2, wherein the airfoil characteristic parameter points comprise characteristic parameter points corresponding to a minimum drag coefficient, and respective linear region end points, respective critical stall points, respective stall recovery points, and respective deep stall points corresponding to a positive angle of attack and a negative angle of attack.

4. The method according to claim 2, wherein the plurality of characteristic regions comprise four characteristic regions with different flow characteristics corresponding to a positive angle of attack and four characteristic regions with different flow characteristics corresponding to a negative angle of attack, wherein the characteristic regions corresponding to the positive angle of attack comprise a first linear region, a first near-stall region, a first stall region and a first deep stall region, and the characteristic regions corresponding to the negative angle of attack comprise a second linear region, a second near-stall region, a second stall region and a second deep stall region; and wherein the flow characteristic of the first linear region and the second linear region is attached flow regime, the flow characteristic of the first near-stall region and the second near-stall region is a flow regime developing from trailing edge separation to stall separation, the flow characteristic of the first stall region and the second stall region is a flow regime from the stall separation to complete leading edge separation, and the flow characteristic of the first deep stall region and the second deep stall region is a flow regime of continued development after the complete leading edge separation.

5. The method according to claim 2, wherein the determining a sub-adjoint matrix corresponding to each of the characteristic regions comprises:
constructing the sub-adjoint matrix corresponding to the characteristic region based on distribution of average variation rate of the aerodynamic coefficient in each of the characteristic regions.

6. The method according to claim 1, wherein the determining a target aerodynamic characteristic parameter matrix and a target adjoint matrix under the target Reynolds number according to the aerodynamic characteristic parameter matrices and the adjoint matrices under the various working conditions comprises:
adjusting the aerodynamic characteristic parameter matrix and the adjoint matrix under the test working condition according to the aerodynamic characteristic parameter matrix and the adjoint matrix under the first simulation working condition and the aerodynamic characteristic parameter matrix and the adjoint matrix under the second simulation working condition to obtain the target aerodynamic characteristic parameter matrix and the target adjoint matrix under the target Reynolds number.

7. The method according to claim 1 or 6, wherein the determining a target aerodynamic characteristic parameter matrix and a target adjoint matrix under the target Reynolds number according to the aerodynamic characteristic parameter matrices and the adjoint matrices under the various working conditions comprises:

determining Reynolds number effect by comparing the aerodynamic characteristic parameter matrix and the adjoint matrix under the first simulation working condition with those under the second simulation working condition; and
adjusting the aerodynamic characteristic parameter matrix and the adjoint matrix under the test working condition based on the Reynolds number effect to obtain the target aerodynamic characteristic parameter matrix and the target adjoint matrix under the target Reynolds number.

8. The method according to claim 7, wherein the determining Reynolds number effect by comparing the aerodynamic characteristic parameter matrix and the adjoint matrix of the first simulation working condition with those of the second simulation working condition comprises:

performing linear subtraction on the aerodynamic characteristic parameter matrices under the first simulation working condition and the second simulation working condition to obtain a first matrix;
performing linear subtraction on the adjoint matrices under the first simulation working condition and the second simulation working condition to obtain a second matrix; and
multiplying the first matrix by a first relaxation factor to obtain a third matrix, and multiplying the second matrix by a second relaxation factor to obtain a fourth matrix,
wherein the third matrix is for characterizing an influence degree of Reynolds number variation on the aerodynamic characteristic parameter matrix in the Reynolds number effect, and the fourth matrix is for characterizing an influence degree of Reynolds number variation on the adjoint matrix in the Reynolds number effect.

9. The method according to claim 8, wherein the adjusting the aerodynamic characteristic parameter matrix and the adjoint matrix under the test working condition based on the Reynolds number effect to obtain the target aerodynamic characteristic parameter matrix and the target adjoint matrix under the target Reynolds number comprises:

linearly adding the third matrix and the aerodynamic characteristic parameter matrix under the test working condition to obtain the target aerodynamic characteristic parameter matrix; and

linearly adding the fourth matrix and the adjoint matrix under the test working condition to obtain the target adjoint matrix.

10. The method according to claim 1, wherein the determining a target aerodynamic characteristic parameter matrix and a target adjoint matrix under the target Reynolds number according to the aerodynamic characteristic parameter matrices and the adjoint matrices under the various working conditions comprises:

performing linear superposition or non-linear superposition on the aerodynamic characteristic parameter matrices under the various working conditions to obtain the target aerodynamic characteristic parameter matrix; and
performing linear superposition or non-linear superposition on the adjoint matrices under the various working conditions to obtain the target adjoint matrix.

11. An aerodynamic data acquisition apparatus, comprising:

an acquisition module configured to acquire airfoil aerodynamic data corresponding to various working conditions, wherein the various working conditions comprise a first simulation working condition under a target Reynolds number, and a test working condition and a second simulation working condition under a reference Reynolds number;
a determination module configured to determine aerodynamic characteristic parameter matrices and adjoint matrices under the various working conditions according to the airfoil aerodynamic data corresponding to the various working conditions;
the determination module further configured to determine a target aerodynamic characteristic parameter matrix and a target adjoint matrix under the target Reynolds number according to the aerodynamic characteristic parameter matrices and the adjoint matrices under the various working conditions; and
an inversion module configured to performing inversion on the target aerodynamic characteristic parameter matrix and the target adjoint matrix under the target Reynolds number to obtain target airfoil aerodynamic data under the target Reynolds number.

12. The apparatus according to claim 11, wherein the airfoil aerodynamic data comprises an aerodynamic performance curve, and the determination module comprises:

an acquisition unit configured to acquire, for each of the working conditions, airfoil characteristic parameter points and flow characteristics thereof in the aerodynamic performance curve under the working condition;
a construction unit configured to construct the aerodynamic characteristic parameter matrix based on the airfoil characteristic parameter points in the aerodynamic performance curve;
a division unit configured to divide the aerodynamic performance curve into a plurality of characteristic regions based on the airfoil characteristic parameter points and flow characteristics thereof;
a determination unit configured to determine a sub-adjoint matrix corresponding to each of the characteristic regions; and
a combination unit configured to combine the sub-adjoint matrices corresponding to the plurality of characteristic regions to obtain the adjoint matrix.

13. The apparatus according to claim 12, wherein the airfoil characteristic parameter points comprise characteristic parameter points corresponding to a minimum drag coefficient, and respective linear region end points, respective critical stall points, respective stall recovery points, and respective deep stall points corresponding to a positive angle of attack and a negative angle of attack.

14. The apparatus according to claim 12, wherein the plurality of characteristic regions comprise four characteristic regions with different flow characteristics corresponding to a positive angle of attack and four characteristic regions with different flow characteristics corresponding to a negative angle of attack, wherein the characteristic regions corresponding to the positive angle of attack comprise a first linear region, a first near-stall region, a first stall region and a first deep stall region, and the characteristic regions corresponding to the negative angle of attack comprise a second linear region, a second near-stall region, a second stall region and a second deep stall region; and wherein the flow characteristic of the first linear region and the second linear region is attached flow regime, the flow characteristic of the first near-stall region and the second near-stall region is a flow regime developing from trailing edge separation to stall separation, the flow characteristic of the first stall region and the second stall region is a flow regime from the stall separation to complete leading edge separation, and the flow characteristic of the first deep stall region and the second deep stall region is a flow regime of continued development after the complete leading edge separation.

15. The apparatus according to claim 12, wherein the determination unit is specifically configured to construct the sub-adjoint matrix corresponding to the characteristic region based on distribution of average variation rate of the aerodynamic coefficient in each of the characteristic regions.

16. The apparatus according to claim 11, wherein the determination module is specifically configured to adjust the aerodynamic characteristic parameter matrix and the adjoint matrix under the test working condition according to the aerodynamic characteristic parameter matrix and the adjoint matrix under the first simulation working condition and the aerodynamic characteristic parameter matrix and the adjoint matrix under the second simulation working condition to obtain the target aerodynamic characteristic parameter matrix and the target adjoint matrix under the target Reynolds number.

17. The apparatus according to claim 11 or 16, wherein the determination module comprises:

a determination unit configured to determine Reynolds number effect by comparing the aerodynamic characteristic parameter matrix and the adjoint matrix under the first simulation working condition with those under the second simulation working condition; and
an adjustment unit configured to adjust the aerodynamic characteristic parameter matrix and the adjoint matrix under the test working condition based on the Reynolds number effect to obtain the target aerodynamic characteristic parameter matrix and the target adjoint matrix under the target Reynolds number.

18. The apparatus according to claim 17, wherein the determination unit is specifically configured to:

perform linear subtraction on the aerodynamic characteristic parameter matrices under the first simulation working condition and the second simulation working condition to obtain a first matrix;
perform linear subtraction on the adjoint matrices under the first simulation working condition and the second simulation working condition to obtain a second matrix; and
multiply the first matrix by a first relaxation factor to obtain a third matrix, and multiply the second matrix by a second relaxation factor to obtain a fourth matrix,
wherein the third matrix is for characterizing an influence degree of Reynolds number variation on the aerodynamic characteristic parameter matrix in the Reynolds number effect, and the fourth matrix is for characterizing an influence degree of Reynolds number variation on the adjoint matrix in the Reynolds number effect.

19. The apparatus according to claim 18, wherein the adjustment unit is specifically configured to linearly add the third matrix and the aerodynamic characteristic parameter matrix under the test working condition to obtain the target aerodynamic characteristic parameter matrix, and linearly add the fourth matrix and the adjoint matrix under the test working condition to obtain the target adjoint matrix.

20. The apparatus according to claim 11, wherein the determination module is specifically configured to:

perform linear superposition or non-linear superposition on the aerodynamic characteristic parameter matrices under the various working conditions to obtain the target aerodynamic characteristic parameter matrix, and
perform linear superposition or non-linear superposition on the adjoint matrices under the various working conditions to obtain the target adjoint matrix.

21. An electronic device, comprising a processor and a memory storing computer program instructions, wherein the computer program instructions, when executed by the processor, implement steps of the aerodynamic data acquisition method according to any one of claims 1-10.

22. A computer readable storage medium having stored thereon computer program instructions which, when executed by a processor, implement steps of the aerodynamic data acquisition method according to any one of claims 1-10.

23. A computer program product being stored in a non-volatile storage medium, wherein the computer program product is executed by at least one processor to implement steps of the aerodynamic data acquisition method according to any one of claims 1-10.

24. A chip comprising a processor and a communication interface, the communication interface being coupled to the processor, wherein the processor is configured to run programs or instructions to implement steps of the aerodynamic data acquisition method according to any one of claims 1-10.

25. An electronic device for implementing steps of the aerodynamic data acquisition method according to any one of claims 1-10.

110

acquiring airfoil aerodynamic data corresponding to various working conditions

120

determining aerodynamic characteristic parameter matrices and adjoint matrices under the various working conditions according to the airfoil aerodynamic data corresponding to the various working conditions

130

determining a target aerodynamic characteristic parameter matrix and a target adjoint matrix under the target Reynolds number according to the aerodynamic characteristic parameter matrices and the adjoint matrices under the various working conditions

140

performing inversion on the target aerodynamic characteristic parameter matrix and the target adjoint matrix under the target Reynolds number to obtain target airfoil aerodynamic data under the target Reynolds number

Fig. 1

210

acquiring, for each of the working conditions, airfoil characteristic parameter points and flow characteristics thereof in the aerodynamic performance curve under the working condition

220

constructing the aerodynamic characteristic parameter matrix based on the airfoil characteristic parameter points in the aerodynamic performance curve

230

dividing the aerodynamic performance curve into a plurality of characteristic regions based on the airfoil characteristic parameter points and flow characteristics thereof

240

determining a sub-adjoint matrix corresponding to each of the characteristic regions

250

combining the sub-adjoint matrices corresponding to the plurality of characteristic regions to obtain the adjoint matrix

Fig. 2

Fig. 3

Fig. 4

Fig. 5

610

determining Reynolds number effect by comparing the aerodynamic characteristic parameter matrix and the adjoint matrix under the first simulation working condition with those under the second simulation working condition

620

Adjusting the aerodynamic characteristic parameter matrix and the adjoint matrix under the test working condition based on the Reynolds number effect to obtain the target aerodynamic characteristic parameter matrix and the target adjoint matrix under the target Reynolds number

Fig. 6

710

performing linear subtraction on the aerodynamic characteristic parameter matrices under the first simulation working condition and the second simulation working condition to obtain a first matrix

720

performing linear subtraction on the adjoint matrices under the first simulation working condition and the second simulation working condition to obtain a second matrix

730

multiplying the first matrix by a first relaxation factor to obtain a third matrix, and multiplying the second matrix by a second relaxation factor to obtain a fourth matrix

Fig. 7

Aerodynamic data acquisition apparatus 800

Acquisition module 810

Determination module 820

Inversion module 830

Fig. 8

900

| Memory 902 | Processor 901 | Communication interface 903 |

Bus 910

Fig. 9

## INTERNATIONAL SEARCH REPORT

| International application No. |
| --- |
| **PCT/CN2023/102822** |

**A. CLASSIFICATION OF SUBJECT MATTER**

G06F 30/17(2020.01)i

According to International Patent Classification (IPC) or to both national classification and IPC

**B. FIELDS SEARCHED**

Minimum documentation searched (classification system followed by classification symbols)

IPC:G06F,G01M,F04D

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 翼型, 气动, 工况, 雷诺数, 仿真, 参数, 特征, 曲线, 修正, 调整, 线性; airfoil, profile, section, air-operated, working condition, reynolds number, simulate, parameter, feature, curve, correct, amend, adjust, linear

**C. DOCUMENTS CONSIDERED TO BE RELEVANT**

| Category* | Citation of document, with indication, where appropriate, of the relevant passages | Relevant to claim No. |
| --- | --- | --- |
| X | 梁湿等 (LIANG, Shi et al.). "风力机翼型气动力的雷诺数修正及其影响分析 (Reynolds Number Correction and Effects Analysis of Wind Turbine Airfoils)" 可再生能源 (*Renewable Energy Resources*), Vol. 33, No. 11, 30 November 2015 (2015-11-30), 1658-1663 sections 1-4 | 1, 6-7, 10-11, 16-17, 20-25 |
| A | 梁湿等 (LIANG, Shi et al.). "风力机翼型气动力的雷诺数修正及其影响分析 (Reynolds Number Correction and Effects Analysis of Wind Turbine Airfoils)" 可再生能源 (*Renewable Energy Resources*), Vol. 33, No. 11, 30 November 2015 (2015-11-30), 1658-1663 sections 1-4 | 2-5, 8-9, 12-15, 18-19 |
| A | CN 109190283 A (INSTITUTE OF ENGINEERING THERMOPHYSICS, CHINESE ACADEMY OF SCIENCES) 11 January 2019 (2019-01-11) entire document | 1-25 |
| A | CN 109779972 A (HANGZHOU TURBINE POWER GROUP CO., LTD.) 21 May 2019 (2019-05-21) entire document | 1-25 |

☑ Further documents are listed in the continuation of Box C. ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **30 November 2023** | **15 December 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/102822** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 115615655 A (AVIC SHENYANG AERODYNAMICS RESEARCH INSTITUTE) 17 January 2023 (2023-01-17)<br>  entire document | 1-25 |
| A | CN 112362291 A (CHENGDU AIRCRAFT INDUSTRIAL (GROUP) CO., LTD.) 12 February 2021 (2021-02-12)<br>  entire document | 1-25 |
| A | KR 101541738 B1 (YONSEI UNIVERSITY WONJU INDUSTRY-ACADEMIC COOPERATION FOUNDATION) 05 August 2015 (2015-08-05)<br>  entire document | 1-25 |

Form PCT/ISA/210 (second sheet) (July 2022)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| CN | 109190283 | A | 11 January 2019 | CN | 109190283 | B | 14 March 2023 |
| CN | 109779972 | A | 21 May 2019 | CN | 109779972 | B | 12 January 2021 |
| CN | 115615655 | A | 17 January 2023 | CN | 115615655 | B | 31 March 2023 |
| CN | 112362291 | A | 12 February 2021 | CN | 112362291 | B | 10 December 2021 |
| KR | 101541738 | B1 | 05 August 2015 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310626283X